# EUROPÄISCHE PATENTSCHRIFT

(11) **EP 2 378 093 B1**
(45) Veröffentlichungstag und Bekanntmachung des Hinweises auf die Patenterteilung: **11.11.2015**
(21) Anmeldenummer: 11157076.8
(22) Anmeldetag: 04.03.2011
(51) Int. Cl.: F01N 13/14, F01N 3/28

(54) **Abgasbehandlungseinrichtung**
Exhaust gas treatment device
Dispositif de traitement des gaz d'échappement

(30) Priorität: 15.04.2010 DE 102010015271
(43) Veröffentlichungstag der Anmeldung: 19.10.2011
(73) Patentinhaber: Eberspächer Exhaust Technology GmbH & Co. KG, 66539 Neunkirchen (DE)
(72) Erfinder: Schwarz, Roland, 73732 Esslingen (DE); Grupp, Johannes, 73072 Donzdorf (DE); Wenz, Marco, 73730 Esslingen (DE)
(74) Vertreter: BRP Renaud & Partner mbB Rechtsanwälte Patentanwälte Steuerberater

(56) Entgegenhaltungen:
- EP-A2- 1 715 154
- DE-A1- 2 364 425
- DE-A1- 19 711 789
- FR-A1- 2 877 038

## Beschreibung

Die vorliegende Erfindung betrifft eine Abgasbehandlungseinrichtung für eine Abgasanlage einer Brennkraftmaschine, insbesondere eines Kraftfahrzeugs.

Üblicherweise umfasst eine Abgasbehandlungseinrichtung, bei der es sich bspw. um einen Katalysator oder um einen Partikelfilter handelt, ein Gehäuse, sowie zumindest ein darin angeordnetes Abgasbehandlungselement, z. Bsp. ein Katalysatorelement oder ein Partikelfilterelement. Bei üblicher Bauart weist das Gehäuse einen Mantel sowie einen Auslasstrichter auf, wobei üblicherweise auch ein Einlasstrichter vorhanden sein kann. Das jeweilige Abgasbehandlungselement ist in der Regel mit einer Lagermatte, die das Abgasbehandlungselement in der Umfangsrichtung umhüllt, im Mantel des Gehäuses angeordnet und über einen Stützring axial am Gehäuse abgestützt.

Zur Reduzierung der thermischen Belastung einer Umgebung der Abgasbehandlungseinrichtung ist es grundsätzlich möglich, den Auslasstrichter mit einer Luftspaltisolierung auszustatten, wozu der Auslasstrichter zumindest bereichsweise doppelwandig gestaltet ist. Zu diesem Zweck kann der Auslasstrichter einen Außentrichter und einen Innentrichter aufweisen, zwischen denen ein Isolationsraum ausgebildet ist.

Aus der DE 23 64 425 A ist eine solche Abgasbehandlungseinrichtung für eine Abgasanlage bekannt, die ein Gehäuse mit einem Auslasstrichter und einem Mantel aufweist, in dem ein Abgasbehandlungselement angeordnet ist. Der Auslasstrichter ist mit einem Innentrichter und einem Außentrichter ausgestattet, zwischen denen ein Isolationsraum ausgebildet ist, wobei der Innentrichter an einem inneren Ende axial lose vom Außentrichter ist.

Problematisch bei einer derartigen Abgasbehandlungseinrichtung sind die im Betrieb auftretenden thermischen Dehnungseffekte, die zu Relativbewegungen und somit zu mechanischen Spannungen der betroffenen Bestandteile führen. Beispielsweise wärmt sich der Innentrichter im Betrieb schneller auf als der Außentrichter. Außerdem kann der Innentrichter höhere Temperaturen erreichen als der Außentrichter. Dies führt zu einer unterschiedlichen Wärmedehnung zwischen Außentrichter und Innentrichter.

Die vorliegende Erfindung beschäftigt sich mit dem Problem, für eine Abgasbehandlungseinrichtung der eingangs genannten Art eine verbesserte Ausführungsform anzugeben, die sich insbesondere dadurch charakterisiert, dass thermisch bedingte Bespannungen innerhalb der Abgasbehandlungseinrichtung, vorzugsweise im Bereich des Auslasstrichters, reduziert sind. Ferner soll insbesondere eine verbesserte, vorzugsweise hinsichtlich der Dauerhaltbarkeit verbesserte, thermische Isolation im Bereich des Außentrichters realisierbar sein.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, den Auslasstrichter nur über den Außentrichter mit dem Mantel zu verbinden, den Innentrichter nur im Bereich eines vom Mantel entfernten äußeren Endes mit dem Außentrichter fest zu verbinden und den Stützring nur am Innentrichter abzustützen. Hierdurch ist der Innentrichter im Bereich des Isolationsraums und im Bereich seines dem Mantel zugewandten inneren Endes relativ zum Außentrichter lose, also zumindest in der Axialrichtung beweglich. Thermisch bedingte Spannungen zwischen Innentrichter und Außentrichter können dadurch erheblich reduziert werden. Gleichzeitig bewirkt die Abstützung des Abgasbehandlungselements über den Stützring am Innentrichter eine erhebliche Vereinfachung der Konstruktion, da zusätzliche Halteeinrichtungen, die bspw. am Mantel abgestützt sein können, entfallen können. Dies reduziert einerseits den Herstellungsaufwand und andererseits den Montageaufwand.

Gemäß einer vorteilhaften Ausführungsform kann das innere Ende des Innentrichters als integrale Halterung für den Stützring ausgeformt sein. Hierdurch kann die axial stützende Wirkung bzw. die Stützfunktion des Innentrichters für das Abgasbehandlungselement verbessert werden.

Beispielsweise kann die Halterung einen ringscheibenförmigen Stützboden aufweisen, an dem sich der Stützring abstützt und der vom Innentrichter radial nach außen absteht. Hierdurch kann eine flächige, stabile Abstützung für den Stützring geschaffen werden, die es ermöglicht, vergleichsweise große axiale Stützkräfte aufzunehmen.

Zusätzlich oder alternativ kann die Halterung einen ringförmigen Haltekragen aufweisen, an dem sich der Stützring radial außen abstützt und der vom Innentrichter axial nach innen, also Richtung Mantel bzw. Abgasbehandlungselement absteht. Hierdurch kann eine radiale Fixierung oder Positionierung für den Stützring an der Halterung und somit am Innentrichter realisiert werden. Zweckmäßig kann besagter Haltekragen am Stützboden ausgeformt sein, so dass der Innentrichter an seinem inneren Ende zunächst in den Stützboden und anschließend in den Haltekragen übergeht.

Erfindungsgemäß ist das innere Ende des Innentrichters vom inneren Ende des Außentrichters radial beabstandet. Insbesondere ist der das innere Ende des Innentrichters vom inneren Ende des Außentrichters radial beabstandet entlang des gesamten Umfangs radial beabstandet. Hierdurch ist gewährleistet, dass sich der Innentrichter zumindest im Bereich des inneren Endes auch in radialer Richtung relativ zum Außentrichter ausdehnen kann, ohne dabei mechanische Spannungen zu erzeugen.

Gemäß einer anderen vorteilhaften Ausführungsform können die beiden äußeren Enden der Trichter durch eine Schweißverbindung aneinander befestigt sein. Bevorzugt wird dabei eine umlaufende, stirnseitige Schweißnaht.

Optional können die beiden äußeren Enden der Trichter an einer Hülse befestigt sein, die zu den äußeren Enden der Trichter koaxial angeordnet ist. Eine derartige Hülse führt einerseits zu einer Stabilisierung der äußeren Enden der Trichter und ermöglicht andererseits eine einfache Integration der Abgasbehandlungseinrichtung in die Abgasanlage. Beispielsweise kann die Abgasbehandlungseinrichtung über diese Hülse an ein Abgasrohr oder an eine andere Komponente der Abgasanlage angeschlossen werden.

Gemäß einer vorteilhaften weiteren Ausgestaltung können die beiden äußeren Enden der Trichter durch eine Schweißverbindung an der Hülse befestigt sein, wobei optional vorgesehen sein kann, dass diese Schweißverbindung als umlaufende Schweißnaht ausgestaltet ist, welche die beiden äußeren Enden der Trichter stirnseitig mit der Außenseite oder mit der Innenseite der Hülse verbindet. Hierbei wird eine so genannte Drei-Blech-Naht realisiert, die durch einen einzigen Schweißvorgang drei separate Teile miteinander verbindet.

Entsprechend einer besonders vorteilhaften Ausführungsform kann in dem radial zwischen Innentrichter und Außentrichter ausgebildeten, in Umfangsrichtung umlaufenden Isolationsraum ein thermisch isolierendes Isolationsmaterial angeordnet sein. Hierdurch kann die thermische Isolierung im Auslasstrichter erheblich verbessert werden. Von besonderem Interesse ist dabei der Umstand, dass der am Innentrichter abgestützte Stützring gleichzeitig eine Abdichtung zwischen Abgaspfad und Isolationsraum realisiert, so dass Abgas nicht in den Isolationsraum eintreten kann. Insbesondere kann dadurch eine nachteilige Beaufschlagung des Isolationsmaterials mit heißen Abgasen vermieden werden.

Beispielsweise kann dadurch eine Beschädigung des Isolationsmaterials sowie ein Austrag des Isolationsmaterials aus dem Isolationsraum reduziert bzw. vermieden werden. Zweckmäßig ist der Stützring am Abgasbehandlungselement im Bereich eines Außenquerschnitts axial an einer Stirnseite des Abgasbehandlungselements angeordnet. Insbesondere ist der Stützring am Abgasbehandlungselement so positioniert, dass Abgas aus dem Abgasbehandlungselement nur in einem Bereich austreten kann, der radial innerhalb des Stützrings liegt. Mit anderen Worten, der Stützring ist an der auslassseitigen axialen Stirnseite des Abgasbehandlungselements radial so weit außen positioniert, dass kein Austrittsbereich auftritt, der radial außerhalb des Stützrings liegt.

Entsprechend einer alternativen Ausführungsform kann im Isolationsraum ein Isolationskörper angeordnet sein, der sich radial außen am Außentrichter und radial innen am Innentrichter abstützt und der aus einem thermisch isolierenden Isolationsmaterial besteht. Ein derartiger Isolationskörper besitzt eine eigene Form, die an die Form des Isolationsraums angepasst ist und dadurch besonders günstige Eigenschaften hinsichtlich der erzielbaren Anpresskräfte, Stützwirkung und Isolationswirkung besitzt.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert.

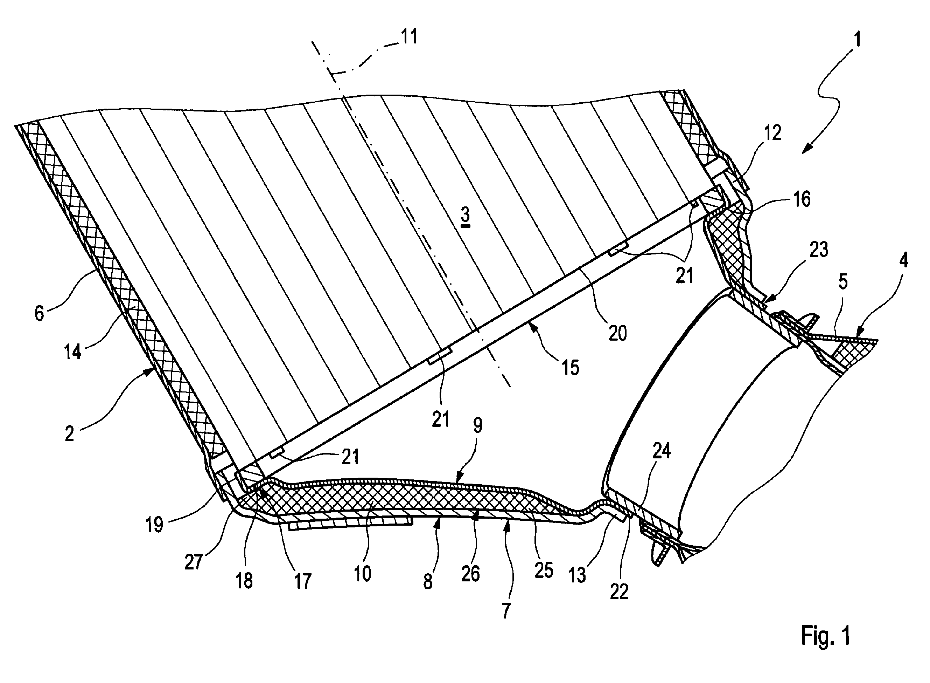

Die einzige Figur 1 zeigt eine geringfügig perspektivische Darstellung einer Abgasbehandlungseinrichtung im Längsschnitt im Bereich eines Auslasstrichters.

Entsprechend Fig. 1 umfasst eine hier nur teilweise dargestellte Abgasbehandlungseinrichtung 1 ein Gehäuse 2 und wenigstens ein Abgasbehandlungselement 3, das im Gehäuse 2 angeordnet ist. Die Abgasbehandlungseinrichtung 1 eignet sich zur Verwendung in einer Abgasanlage 4 einer Brennkraftmaschine, die sich insbesondere in einem Kraftfahrzeug befinden kann. Von der Abgasanlage 4 ist hier nur ein Bestandteil 5 wiedergegeben, an den die Abgasbehandlungseinrichtung 1 angeschlossen ist.

Das Gehäuse 2 weist einen Mantel 6 und einen Auslasstrichter 7 auf. Üblicherweise kann das Gehäuse 2 auch einen Einlasstrichter aufweisen. Der Auslasstrichter 7 umfasst einen Außentrichter 8 und einen Innentrichter 9. Innentrichter 9 und Außentrichter 8 sind hinsichtlich ihrer Dimensionen so aufeinander abgestimmt, dass zwischen Innentrichter 9 und Außentrichter 8 ein Isolationsraum 10 ausgebildet ist, der in Umfangsrichtung geschlossen umläuft. Die Umfangsrichtung bezieht sich dabei auf eine Längsmittelachse 11 des Gehäuses 2 bzw. der Abgasbehandlungseinrichtung 1. Die Längsmittelachse 11 definiert dabei die Axialrichtung bzw. Längsrichtung der Abgasbehandlungseinrichtung 1 bzw. des Gehäuses 2 sowie des Abgasbehandlungselements 3.

Der Außentrichter 8 ist an einem dem Mantel 6 zugewandten inneren Ende 12 mit dem Mantel 6 fest verbunden. Im gezeigten Beispiel der Fig. 1 ist der Außentrichter 8 koaxial in den Mantel 6 eingesteckt. Zweckmäßig kann der Außentrichter 8 mit dem Mantel 6 verschweißt sein. Ebenso ist es möglich, den Außentrichter 8 außen auf den Mantel 6 aufzustecken. Ferner ist auch eine integrale Bauweise denkbar, bei welcher Mantel 6 und Außentrichter 8 aus einem Blechteil durch Umformung hergestellt sind, bspw. durch Tiefziehen. Bevorzugt ist jedoch die hier gezeigte Bauweise, bei welcher Mantel 6 und Außentrichter 8 separate Bauteile bilden, wobei der Außentrichter 8 in den Mantel 6 eingesteckt ist.

Der Außentrichter 8 ist außerdem an einem vom Mantel 6 abgewandten äußeren Ende 13 mit dem Innentrichter 9 fest verbunden.

Das Abgasbehandlungselement 3 kann bspw. ein Partikelfilterelement sein. Ebenso kann es sich um ein Katalysatorelement handeln. Dementsprechend handelt es sich bei der Abgasbehandlungseinrichtung 1 zweckmäßig um eine Partikelfiltereinrichtung oder um eine Katalysatoreinrichtung oder um eine Kombination daraus.

Das Abgasbehandlungselement 3 ist in der Umfangsrichtung von einer Lagermatte 14 umhüllt und zusammen mit dieser Lagermatte 14 im Mantel 6 angeordnet. Das Abgasbehandlungselement 3 ist dadurch über die Lagermatte 14 radial am Mantel 6 abgestützt. Die Radialrichtung bezieht sich dabei auf die Längsmittelachse 11. Axial ist das Abgasbehandlungselement 3 über einen Stützring 15 am Auslasstrichter 7 abgestützt. Dabei ist bei der hier vorgestellten Abgasbehandlungseinrichtung 1 der Stützring 15 an einem dem Mantel 6 zugewandten inneren Ende 16 des Innentrichters 9 abgestützt, also nicht am Außentrichter 8. Somit trägt der Innentrichter 9 an seinem inneren Ende 16 den Stützring 15. Desweiteren ist vorgesehen, dass der Innentrichter 9 im Bereich seines inneren Endes 16 relativ zum Außentrichter 8 zumindest in der Axialrichtung lose ist. Mit anderen Worten, zumindest in der Axialrichtung sind Innentrichter 9 und Außentrichter 8 im Bereich ihrer inneren Enden 12, 16 nicht aneinander befestigt, sondern relativ zueinander beweglich. Dies gilt entsprechend auch für den Bereich des Isolationsraums 10, in dem sich die beiden Trichter 8, 9 nicht berühren.

Bevorzugt ist dabei die hier gezeigte Konfiguration, bei welcher das innere Ende 16 des Innentrichters 9 vom inneren Ende 12 des Außentrichters 8 radial beabstandet ist, und zwar insbesondere entlang des gesamten Umfangs. Hierdurch sind Innentrichter 9 und Außentrichter 8 im Bereich ihrer inneren Enden 12, 16 auch radial lose bzw. nicht aneinander befestigt bzw. relativ zueinander beweglich. Bei dieser Ausführungsform ist der Innentrichter 9 somit nach innen freistehend am Außentrichter 8 angeordnet.

Das innere Ende 16 des Innentrichters 9 ist hier als integrale Halterung 17 für den Stützring 15 ausgeformt. Mit anderen Worten, die zur Aufnahme des Stützrings 15 vorgesehene Halterung 17 ist integral am Innentrichter 9 ausgeformt. Besagte Halterung 17 weist hier einen ringscheibenförmigen Stützboden 18 auf. An diesem Stützboden 18 ist der Stützring 15 axial abgestützt. Dieser Stützboden 18 steht vom Innentrichter 9 radial nach außen ab. Er liegt zweckmäßig in einer Stützbodenebene, die sich senkrecht zur Längsmittelachse 11 erstreckt. Zusätzlich ist hier vorgesehen, dass die Halterung 17 außerdem einen ringförmigen Haltekragen 19 aufweist. An diesem Haltekragen 19 kann sich der Stützring 15 radial außen abstützen. Hierzu steht der Haltekragen 19 axial nach innen, also in Richtung Abgasbehandlungselement 3 vom Innentrichter 9 ab. Sofern die Halterung 17 wie hier sowohl einen Stützboden 18 als auch einen Haltekragen 19 aufweist, ist der Haltekragen 19 zweckmäßig am Stützboden 18 ausgeformt. Dementsprechend geht der Innentrichter 9 im Bereich seines inneren Endes 16 integral zunächst in den Stützboden 18 und anschließend in den Haltekragen 19 über.

Der Stützring 15 ist zweckmäßig soweit wie möglich radial außen an einer dem Auslasstrichter 7 zugewandten auslassseitigen axialen Stirnseite 20 des Abgasbehandlungselements 3 positioniert. Hierdurch kann vermieden werden, dass Abgas radial außerhalb des Stützrings 15 axial aus dem Abgasbehandlungselement 3 austritt. Insbesondere schließt der Stützring 15 radial außen bündig mit einem Außenumfang bzw. mit einer Außenseite des Abgasbehandlungselements 3 ab; ebenso kann der Stützring 15 radial über den Außenquerschnitt des Abgasbehandlungselements 3 vorstehen.

Im gezeigten Beispiel kann der Stützring 15 mit mehreren radialen Durchlassöffnungen 21 ausgestattet sein, durch die bspw. ein Druckausgleich zwischen dem Abgaspfad und den Bereichen möglich ist, in denen die Lagermatte 14 und der Isolationsraum 10 angeordnet ist. Diese Durchlassöffnungen 21 sind am Stützring 15 zweckmäßig an der dem Abgasbehandlungselement 3 zugewandten Stirnseite vorgesehen.

Das äußere Ende 13 des Außentrichters 8 kann mittels einer Schweißverbindung mit einem vom Mantel 6 abgewandten äußeren Ende 22 des Innentrichters 9 fest verbunden sein. Die jeweilige Schweißverbindung, die in Fig. 1 durch einen Pfeil 23 angedeutet ist, kann dabei zweckmäßig als stirnseitig umlaufende Schweißnaht ausgestaltet sein. Im Beispiel wird mit Hilfe dieser umlaufenden Schweißnaht gleichzeitig eine feste Verbindung zwischen den beiden äußeren Enden 13, 22 der beiden Trichter 8, 9 mit einer Hülse 24 geschaffen, die koaxial zu den beiden auslassseitigen bzw. äußeren Enden 13, 22 der beiden Trichter 8, 9 angeordnet ist. Diese Schweißverbindung 23 kann dabei die beiden äußeren Enden 13, 22 der Trichter 8, 9 stirnseitig mit der Außenseite der Hülse 24 verbinden, sofern die Hülse 24 wie im Beispiel der Fig. 2 in den Innentrichter 9 eingesteckt ist. Die Schweißnaht 23 kann dann einfach von außen angebracht werden. Grundsätzlich kann jedoch auch die Hülse 24 außen auf den Außentrichter 8 aufgesteckt sein, wodurch dann die Schweißnaht 23 an der Innenseite der Hülse 24 anzubringen ist. Zweckmäßig wird jedoch die Schweißnaht 23 als Drei-Blech-Naht ausgeführt, die drei Einzelteile, nämlich die beiden Trichter 8, 9 und die Hülse 24 mit einem einzigen Schweißvorgang fest miteinander verbindet.

Bei der in Fig. 1 gezeigten Ausführungsform ist im Isolationsraum 10 ein thermisch isolierendes Isolationsmaterial 25 angeordnet. Dieses Isolationsmaterial 25 kann dabei in Form einer Isolationsmatte verwendet werden, die grundsätzlich einen ähnlichen Aufbau wie die Lagermatte 14 aufweisen kann. Alternativ kann das Isolationsmaterial 25 auch in Form eines Isolationskörpers 26 realisiert werden, bei dem es sich um einen Formkörper aus Isolationsmaterial 25 handelt und der sich radial außen am Außentrichter 8 und radial innen am Innentrichter 9 abstützt. Durch eine zum Außentrichter 8 und zum Innentrichter 9 komplementäre Formgebung des Isolationskörpers 26 ergibt sich eine Stabilisierung für den Innentrichter 9, da er über den Isolationskörper 26 effektiv am Außentrichter 8 abgestützt werden kann. Hierdurch ist es insbesondere möglich, den Innentrichter 9 mit einer kleineren Wandstärke zu realisieren als den Außentrichter 8. Beispielsweise ist die Wandstärke des Innentrichters 9 etwa halb so groß wie die Wandstärke des Außentrichters 8.

Der hier gezeigte Isolationskörper 26 kann an einem dem Mantel 6 zugewandten inneren Ende 27 so geformt sein, dass er dort den Innentrichter 9 im Bereich des Stützrings 15 axial stützt. Beispielsweise kann das innere Ende 27 des Isolationskörpers 26 hierzu mit einer ringscheibenförmigen axialen Stirnseite versehen sein, welche das innere Ende 16 des Innenrichters 9 im Bereich der Halterung 17, insbesondere im Bereich des Stützbodens 18, axial unterstützt. Hierdurch ergibt sich eine flächige und somit effektive Abstützung des Innentrichters 9 im Bereich der Halterung 17, wodurch die axialen Abstützkräfte, die das Abgasbehandlungselement 3 axial im Gehäuse 2 positionieren, über den Stützring 15 auf den Innentrichter 9 und über den Isolationskörper 26 bzw. über das Isolationsmaterial 25 auf den Außentrichter 8 übertragen werden. Der Isolationskörper 26 unterstützt den Innentrichter 9 dabei an einer dem Außentrichter 8 zugewandten Außenseite.

Der Stützring 15 kann bspw. aus einem Drahtgestrick hergestellt sein. Die Lagermatte 14 kann aus einem üblichen Lagermaterial hergestellt sein. Das Abgasbehandlungselement 3 kann aus Metall hergestellt sein. Bevorzugt ist jedoch ein keramisches Abgasbehandlungselement 3. Insbesondere kann es sich beim Abgasbehandlungselement 3 um einen Monolithen handeln, vorzugsweiße um einen keramischen Monolithen.

## Patentansprüche

1. Abgasbehandlungseinrichtung für eine Abgasanlage (4) einer Brennkraftmaschine, insbesondere eines Kraftfahrzeugs,
- mit einem Gehäuse (2), das einen Mantel (6) und einen Auslasstrichter (7) aufweist,
- mit mindestens einem Abgasbehandlungselement (3), das im Mantel (6) angeordnet ist und das über einen Stützring (15) axial am Gehäuse (2) abgestützt ist,
wobei
- der Auslasstrichter (7) einen Außentrichter (8) und einen Innentrichter (9) aufweist,
- der Außentrichter (8) an einem dem Mantel (6) zugewandten inneren Ende (12) mit dem Mantel (6) fest verbunden ist,
- zwischen dem Innentrichter (9) und dem Außentrichter (8) ein in Umfangsrichtung umlaufender Isolationsraum (10) ausgebildet ist,
- der Innentrichter (9) an einem dem Mantel (6) zugewandten inneren Ende (16) den Stützring (15) trägt und relativ zum Außentrichter (8) zumindest axial lose ist,
**dadurch gekennzeichnet,**
- **dass** der Außentrichter (8) an einem vom Mantel (6) abgewandten äußeren Ende (13) mit dem Innentrichter (9) fest verbunden ist,
- **dass** das innere Ende (16) des Innentrichters (9) vom inneren Ende (12) des Außentrichters (8) radial beabstandet ist.

2. Abgasbehandlungseinrichtung nach Anspruch 1,
**dadurch gekennzeichnet,**
**dass** das innere Ende (16) des Innentrichters (9) als integrale Halterung (17) für den Stützring (15) ausgeformt ist.

3. Abgasbehandlungseinrichtung nach Anspruch 2,
**dadurch gekennzeichnet,**
**dass** die Halterung (17) einen ringscheibenförmigen Stützboden (18) aufweist, an dem sich der Stützring (15) axial abstützt und der vom Innentrichter (9) radial nach außen absteht.

4. Abgasbehandlungseinrichtung nach Anspruch 2 oder 3,
**dadurch gekennzeichnet,**
**dass** die Halterung (17) einen ringförmigen Haltekragen (19) aufweist, an dem sich der Stützring (15) radial außen abstützt und der vom Innentrichter (9) axial nach innen absteht, wobei insbesondere vorgesehen sein kann, dass der Haltekragen (19) am Stützboden (18) ausgeformt ist.

5. Abgasbehandlungseinrichtung nach einem der Ansprüche 1 bis 4,
**dadurch gekennzeichnet,**
**dass** das innere Ende (16) des Innentrichters (9) vom inneren Ende (12) des Außentrichters (8) geschlossen entlang des Umfangs radial beabstandet ist.

6. Abgasbehandlungseinrichtung nach einem der Ansprüche 1 bis 5,
**dadurch gekennzeichnet,**
**dass** die beiden äußeren Enden (13, 22) der Trichter (8, 9) durch eine Schweißverbindung (23) aneinander befestigt sind, wobei insbesondere vorgesehen sein kann, dass die Schweißverbindung (23) als umlaufende, stirnseitige Schweißnaht ausgestaltet ist.

7. Abgasbehandlungseinrichtung nach einem der Ansprüche 1 bis 6,
**dadurch gekennzeichnet,**
**dass** die beiden äußeren Enden (13, 22) der Trichter (8, 9) an einer dazu koaxial angeordneten Hülse (24) befestigt sind.

8. Abgasbehandlungseinrichtung nach Anspruch 7,
**dadurch gekennzeichnet,**
**dass** die beiden äußeren Enden (13, 22) der Trichter (8, 9) durch eine Schweißverbindung (23) an der Hülse (24) befestigt sind, wobei insbesondere vorgesehen sein kann, dass die Schweißverbindung (23) als umlaufende Schweißnaht ausgestaltet ist, welche die beiden äußeren Enden (13, 22) der Trichter (8, 9) stirnseitig mit der Außenseite oder mit der Innenseite der Hülse (24) verbindet.

9. Abgasbehandlungseinrichtung nach einem der Ansprüche 1 bis 8,
**dadurch gekennzeichnet,**
- **dass** im Isolationsraum (10) ein thermisch isolierendes Isolationsmaterial (25) angeordnet ist, oder
- **dass** im Isolationsraum (10) ein Isolationskörper (26) angeordnet ist, der sich radial außen am Außentrichter (8) und radial innen am Innentrichter (9) abstützt und der aus einem thermisch isolierenden Isolationsmaterial (25) besteht.

10. Abgasbehandlungseinrichtung nach Anspruch 9,
**dadurch gekennzeichnet,**
**dass** der Isolationskörper (26) an einem dem Mantel (6) zugewandten inneren Ende (27) den Innentrichter (9) im Bereich des Stützrings (15) axial stützt.

## Claims

1. Exhaust gas treatment device for an exhaust system (4) of an internal combustion engine, in particular of a motor vehicle, comprising:
- a housing (2) which comprises a casing (6) and an outlet funnel (7),
- at least one exhaust gas treatment element (3) which is arranged in the casing (6) and is axially supported on the housing (2) via a support ring (15),
- the outlet funnel (7) comprising an outer funnel (8) and an inner funnel (9),
- the outer funnel (8) being rigidly connected to the casing (6) at an inner end (12) facing the casing (6),
- an insulation space (10) which extends in the circumferential direction being formed between the inner funnel (9) and the outer funnel (8),
- the inner funnel (9) supporting the support ring (15) at an inner end (16) facing the casing (6) and being at least axially loose relative to the outer funnel (8), **characterised in that**
- the outer funnel (8) is rigidly connected to the inner funnel (9) at an outer end (13) remote from the casing (6),
- the inner end (16) of the inner funnel (9) is radially spaced apart from the inner end (12) of the outer funnel (8).

2. Exhaust gas treatment device according to claim 1, **characterised in that** the inner end (16) of the inner funnel (9) is shaped as an integral holder (17) for the support ring (15).

3. Exhaust gas treatment device according to claim 2, **characterised in that** the holder (17) comprises an annular-disc-shaped support base (18) on which the support ring (15) is supported axially and which protrudes radially outwardly away from the inner funnel (9).

4. Exhaust gas treatment device according to either claim 2 or claim 3, **characterised in that** the holder (17) comprises an annular holding collar (19) on which the support ring (15) is supported radially on the outside and which protrudes axially inwards from the inner funnel, it being possible to provide in particular for the holding collar (19) to be formed on the support base (18).

5. Exhaust gas treatment device according to any of claims 1 to 4, **characterised in that** the inner end (16) of the inner funnel (9) is radially spaced apart from the inner end (12) of the outer funnel (8) so as to be closed over the circumference.

6. Exhaust gas treatment device according to any of claims 1 to 5, **characterised in that** the two outer ends (13, 22) of the funnels (8, 9) are fastened to each other by a welded connection (23), is being possible to provide in particular for the welded connection (23) to be configured as a circumferential end-face weld seam.

7. Exhaust gas treatment device according to any of claims 1 to 6, **characterised in that** the two outer ends (13, 22) of the funnels (8, 9) are fastened to a sleeve (24) which is arranged coaxially with respect thereto.

8. Exhaust gas treatment device according to claim 7, **characterised in that** the two outer ends (13, 22) of the funnels (8, 9) are fastened to the sleeve (24) by a welded connection (23), it being possible to provide in particular for the welded connection (23) to be configured as a circumferential weld seam which connects the end faces of the two outer ends (13, 22) of the funnels (8, 9) to the outside or to the inside of the sleeve (24).

9. Exhaust gas treatment device according to any of claims 1 to 8, **characterised in that**:
- in the insulation space (10), a thermally insulating insulation material (25) is arranged, or
- in the insulation space (10) an insulation body (26) is arranged, which is supported radially on the outside on the outer funnel (8) and radially on the inside on the inner funnel (9) and which consists of a thermally insulating insulation material (25).

10. Exhaust gas treatment device according to claim 9, **characterised in that** the insulation body (26) axially supports the inner funnel (9) in the region of the support ring (15) at an inner end (27) facing the casing (6).

## Revendications

1. Dispositif de traitement de gaz d'échappement pour une installation de gaz d'échappement (4) d'un moteur à combustion interne, en particulier d'un véhicule automobile,
- avec un boîtier (2) qui présente une enveloppe (6) et une trémie de sortie (7),
- avec au moins un élément de traitement de gaz d'échappement (3) qui est agencé dans l'enveloppe (6) et qui est en appui par l'intermédiaire d'un anneau d'appui (15) axialement contre le boîtier (2),
- la trémie de sortie (7) présentant une trémie extérieure (8) et une trémie intérieure (9),
- la trémie extérieure (8) étant fixement reliée à une extrémité (12) intérieure tournée vers l'enveloppe (6) à l'enveloppe (6),
- un espace d'isolation (10) tournant dans le sens périphérique étant réalisé entre la trémie intérieure (9) et la trémie extérieure (8),
- la trémie intérieure (9) portant l'anneau d'appui (15) à une extrémité intérieure (16) tournée vers l'enveloppe (6) et étant au moins axialement lâche par rapport à la trémie extérieure (8),
**caractérisé en ce que**
- la trémie extérieure (8) est fixement reliée à une extrémité extérieure (13) éloignée de l'enveloppe (6) à la trémie intérieure (9),
- l'extrémité intérieure (16) de la trémie intérieure (9) est espacée radialement de l'extrémité intérieure (12) de la trémie extérieure (8).

2. Dispositif de traitement de gaz d'échappement selon la revendication 1,
**caractérisé en ce que**
l'extrémité intérieure (16) de la trémie intérieure (9) est formée comme support intégral (17) pour l'anneau d'appui (15).

3. Dispositif de traitement de gaz d'échappement selon la revendication 2,
**caractérisé en ce que**
le support (17) présente un fond d'appui (18) en forme de disque annulaire, contre lequel s'appuie axialement l'anneau d'appui (15) et qui dépasse vers l'extérieur radialement de la trémie intérieure (9).

4. Dispositif de traitement de gaz d'échappement selon la revendication 2 ou 3,
**caractérisé en ce que**
le support (17) présente un collet de retenue (19) annulaire, contre lequel s'appuie radialement à l'extérieur l'anneau d'appui (15) et qui dépasse axialement vers l'intérieur de la trémie intérieure (9), pouvant être prévu en particulier que le collet de retenue (19) soit formé sur le fond d'appui (18).

5. Dispositif de traitement de gaz d'échappement selon l'une quelconque des revendications 1 à 4,
**caractérisé en ce que**
l'extrémité intérieure (16) de la trémie intérieure (9) est espacée radialement de l'extrémité intérieure (12) de la trémie extérieure (8) de manière fermée le long de la périphérie.

6. Dispositif de traitement de gaz d'échappement selon l'une quelconque des revendications 1 à 5,
**caractérisé en ce que**
les deux extrémités extérieures (13, 22) des trémies (8, 9) sont fixées l'une sur l'autre par une liaison soudée (23), pouvant être prévu en particulier que la liaison soudée (23) soit configurée comme un cordon de soudure tournant côté avant.

7. Dispositif de traitement de gaz d'échappement selon l'une quelconque des revendications 1 à 6,
**caractérisé en ce que**
les deux extrémités extérieures (13, 22) des trémies (8, 9) sont fixées sur une douille (24) agencée de manière coaxiale à celles-ci.

8. Dispositif de traitement de gaz d'échappement selon la revendication 7,
**caractérisé en ce que**
les deux extrémités extérieures (13, 22) des trémies (8, 9) sont fixées par une liaison soudée (23) sur la douille (24), pouvant être prévu en particulier que la liaison soudée (23) soit configurée comme cordon de soudure tournant qui relie les deux extrémités extérieures (13, 22) des trémies (8, 9) côté avant au côté extérieur ou au côté intérieur de la douille (24).

9. Dispositif de traitement de gaz d'échappement selon l'une quelconque des revendications 1 à 8,
**caractérisé en ce que**
- un matériau d'isolation (25) thermoisolant est agencé dans l'espace d'isolation (10) ou
- un corps d'isolation (26) est agencé dans l'espace d'isolation (10), lequel s'appuie radialement à l'extérieur contre la trémie extérieure (8) et radialement à l'intérieur contre la trémie intérieure (9) et qui se compose d'un matériau d'isolation (25) thermoisolant.

10. Dispositif de traitement de gaz d'échappement selon la revendication 9,
**caractérisé en ce que**
le corps d'isolation (26) appuie axialement contre une extrémité (27) intérieure tournée vers l'enveloppe (6) la trémie intérieure (9) dans la zone de l'anneau d'appui (15).
